# EUROPÄISCHE PATENTSCHRIFT

(11) **EP 0 999 974 B1**
(45) Veröffentlichungstag und Bekanntmachung des Hinweises auf die Patenterteilung: **14.03.2001**
(21) Anmeldenummer: 98936389.0
(22) Anmeldetag: 24.06.1998
(51) Int. Cl.: B62D 65/00, B23K 37/04

(54) **VERFAHREN ZUM ANBRINGEN DER TÜRSCHARNIERE AN KFZ-KAROSSERIEN UND VORRICHTUNG ZUR DURCHFÜHRUNG DES VERFAHRENS**
METHOD FOR INSTALLING DOOR HINGES ON CAR BODIES, AND DEVICE FOR IMPLEMENTING SAME
PROCEDE DE POSE DE CHARNIERES DE PORTIERE SUR DES CARROSSERIES DE VEHICULE ET DISPOSITIF POUR EXECUTER CE PROCEDE

(30) Priorität: 07.08.1997 DE 19734157
(43) Veröffentlichungstag der Anmeldung: 17.05.2000
(73) Patentinhaber: Thyssen Krupp Industries AG, 45128 Essen (DE)
(72) Erfinder: JÄCK, Kurt, D-88326 Aulendorf (DE)
(74) Vertreter: Dahlkamp, Heinrich-Leo, Dipl.-Ing.
(86) Internationale Anmeldenummer: EP9803865
(87) Internationale Veröffentlichungsnummer: WO9907596

(56) Entgegenhaltungen:
- EP-A- 0 685 622
- US-A- 4 416 088
- US-A- 4 736 515

## Beschreibung

Die Erfindung betrifft ein Verfahren und eine Vorrichtung zum Anbringen der Türscharniere an Kraftfahrzeugkarosserien.

Aus der DE 33 42 570 C2 ist ein Verfahren zum Befestigen einer Tür an einer Karosserie eines Kraftfahrzeuges bekannt, wobei die Karosserien mit Abstand zueinander durch einen Endlosförderer taktweise zur vorbestimmten Stelle herangefördert werden und die mit zwei in unterschiedlichen Ebenen übereinander befestigten Scharnieren versehene Tür durch einen Industrieroboter positionsgerecht zur Scharnierlage herangefördert und befestigt wird. Hierbei wird die Tür raumgelenkig beweglich - schwimmend - gegen die dafür vorgesehene Öffnung bewegt bis ein Tastfinger mit einer dafür vorbestimmten Stelle in Berührungskontakt gelangt. Gleichzeitig mit dem Ertasten der Höhe der Scharniere wird die Winkellage der nach außen gerichteten Seitenwand des betreffenden Scharnierteiles in Bezug auf die Karosserie erkannt und es werden sowohl die Werte für die vertikale Höhenzuordnung der Scharniere als auch die Werte für die Winkellage der Scharniere jeweils an einen Rechner weitergegeben. Mit ein oder mehreren Schweißrobotern werden dann abhängig von den im Rechner gespeicherten Tastwerten die bereits mit der Tür verbundenen Türscharniere an die Karosserie angeschweißt. Bei dieser sogenannten sensorgeführten Robotertechnik können immer wieder Ungenauigkeiten durch die Toleranzen der Sensoren und der Robotertechnik auftreten. Außerdem kann es durch die frühzeitige Befestigung der Tür an der Karosserie zu Behinderungen bei der späteren Montage der Inneneinrichtung des Autos kommen. Es besteht daher häufig der Wunsch, dass zunächst nur die Türscharniere an den Türsäulen der Karosserie möglichst positionsgenau befestigt werden und dass die Tür erst später, möglichst nach vollständiger Innenmontage, eingesetzt wird.

Ein ähnliches Verfahren ist aus der JP 02-258 485 A bekannt, bei dem ebenfalls die Türöffnungsweite mit einer Vielzahl von Meßtastern und die Lage der Karosserie mit Hilfe von Bilderfassungskameras gemessen, die Meßwerte zentral erfasst und der weitere Einbau der Türscharniere über eine NC-Maschine gesteuert wird.

In der DE 40 11 909 C3 ist eine PKW-Tür beschrieben, die an den Scharnieren spezielle Raumgelenke besitzt, um die Montage und Demontage der Türen zu vereinfachen. Dabei sollen entgegen der oben genannten Montage-philosophie, wonach alle Innenteile durch die bereits angeschweißten oder angeschraubten Türen in das Innere des Autos eingebracht werden müssen, die Türen selbst später montiert werden, indem die fertig lackierten und fertig mit Glas und Hebemechanismus und dergleichen montierten Türen erst nachdem die Karosserie ausgestattet ist, an den Türsäulen befestigt werden. Die Montage mit Hilfe dieser konstruktiv relativ aufwendigen Raumgelenke ist allerdings wegen der genauen Positionierung schwierig und zeitaufwendig.

Der Erfindung liegt daher die Aufgabe zugrunde, ein Verfahren und eine Vorrichtung zum Anbringen der Türscharniere an Kfz-Karosserien vorzuschlagen, bei dem ebenfalls die Türen nach der Innenmontage an den Türsäulen befestigt und mit einfacherer Konstruktion und mit weniger Zeitaufwand die Türscharniere positionsgenau befestigt werden.

Die Lösung dieser Aufgabe ist in den Ansprüchen 1 und 7 angegeben. Die Unteransprüche 2 bis 6 sowie 8 bis 10 enthalten sinnvolle ergänzende Ausführungsformen und Verfahrensmerkmale.

Erfindungsgemäß wird taktil, d.h. an jeder Tür, die tatsächliche Türöffnungsweite in Fahrzeuglängsrichtung (X-Richtung) mit einem mechanisch in X-Richtung wirkenden Taster erfasst. Dieser Taster ist wiederum mechanisch direkt über Hebelgetriebe mit dem Positioniersystem für die Türscharniere verbunden. Abhängig von der erfassten Maßabweichung wird dann in einem vorbestimmten oder einstellbaren Übersetzungsverhältnis von vorzugsweise 1 : 2 bis 1 : 3 automatisch die Maßabweichung in X-Richtung so korrigiert, dass bei später eingebauter Tür zumindest der senkrechte Spalt eine möglichst einheitliche Spaltbreite besitzt. Nach dieser Korrektur werden dann in an sich bekannter Weise die Türscharniere mit den Türsäulen verspannt und daran vorzugsweise verschraubt. Die Erfindung basiert auf einem flexiblen Positioniersystem, wobei durch die Verfahrbarkeit in X-Richtung mit Hilfe eines integrierten Verfahrschlittens die tatsächliche Öffnungsweite im Seitenrahmen der Karosserie ertastet und z.B. die Anordnung der sogenannten B-Säulenscharniere zur Befestigung der hinteren Tür entsprechend der Öffnungsweite um die halbe Toleranzabweichung (in Plus- oder Minusrichtung) korrigiert wird. Dadurch wird eine identische Spaltbreite zwischen Vorder- und Hintertür sowie zwischen Hintertür und C-Säule zumindest in dem geforderten Toleranzband garantiert.

Das erfindungsgemäße flexible Positioniersystem kann sowohl mit Robotertechnik als auch manuell eingesetzt werden. Die Türscharniere können manuell in das Positioniersystem eingelegt oder auch automatisch durch das Positioniersystem aus Magazinen abgeholt werden.

Die beiden übereinander angeordneten Türscharniere einer Tür werden zweckmäßigerweise zur Montage von einer gemeinsamen Traverse aufgenommen, welche noch auf einem zusätzlichen Drehpunkt am Positioniersystem und/oder an einem Montagerahmen gelagert ist, damit die Scharniere an jeder Türsäule in Fahrzeugquerrichtung (Y-Richtung) spannungsfrei zur Anlage gebracht werden können. Auch diese Bewegung kann sowohl manuell als auch automatisch durchgeführt werden.

Es hat sich darüber hinaus als günstig erwiesen, zum Ausgleich des durch das Gewicht der Tür verursachten Durchhängens der Tür (Door-Sagging) die Türscharniere um einen entsprechenden vorgegebenen Winkel um eine waagerechte Achse entgegengesetzt zu verdrehen und dann an der Türsäule zu befestigen. Dieser Verdrehwinkel wird bestimmt durch einen nach der späteren Montage festgestellten Meßwert, der dann bereits vor der Montage der Türscharniere berücksichtigt wird. Zur Positionierung des Montagerahmens an der Karosserie haben sich integrierte pneumatische, in Y- und Z-Richtung wirkende Ausgleichssysteme bewährt, um Toleranzabweichungen zwischen Montagerahmen, Karosserie und Roboter zu eliminieren.

Das erfindungsgemäße flexible Positioniersystem besteht aus einem Taster zur Erfassung der Türöffnungsweite des Seitenrahmens, der über eine Zahnstange und ein Hebelgetriebe für die Korrektur der gemessenen Toleranzabweichung in X-Richtung sorgt, aus einem durch Roboter betätigbaren Montagerahmen mit integrierten in X-, Y- und Z-Richtung verfahrbaren Schlitten, an dem auch das Positioniersystem in X-Richtung verfahrbar ist und an dem auch Füge- und Spanneinrichtungen zur pneumatischen Anpressung der Türscharniere gegen die Türsäulen und Einrichtungen zur dauerhaften Befestigung der Türscharniere an den Türsäulen durch Verschrauben und/oder Verschweißen angeordnet sind.

Der mechanische Taster kann mit Hilfe einer Feder oder einem insbesondere pneumatisch wirkenden Versetzzylinder in X-Richtung gegen eine Meßstelle der Türöffnung gepresst werden, wobei gleichzeitig der Versetzzylinder und/oder die Konturanlage über eine Zahnstange auf das Getriebe zur Einstellung des Toleranzausgleiches wirkt.

Auf dem Montagerahmen können erfindungsgemäß zusätzlich Dreheinrichtungen mit Drehpunkten zum Ausgleich des Door-Saggings angeordnet sein.

Die Erfindung wird anhand der beigefügten Figuren 1 bis 5 beispielsweise näher erläutert. Es zeigen
- Fig. 1: eine Seitenansicht des Montagerahmens mit dem erfindungsgemäßen flexiblen Positioniersystem,
- Fig. 2: eine Draufsicht auf die Vorrichtung nach Fig. 1,
- Fig. 3: einen Schnitt nach der Linie C-C von Fig. 1,
- Fig. 4: einen waagerechten Schnitt durch die B-Säule mit daran befestigtem Türscharnier in vergrößerter Darstellung und
- Fig. 5: einen Schnitt nach der Linie D-D von Fig. 1 in vergrößerter Darstellung.

Nach Befestigung der Seitenrahmen 2 an der Karosserie können die Türscharniere 28 an den Türsäulen 4 und 5 befestigt werden. Die Erfindung bezieht sich insbesondere darauf, dass bei einem PKW mit vier oder fünf Türen jeweils zwei übereinander angeordnete Scharniere 28 an der vorderen Türsäule 4 (A-Säule) und an der mittleren Türsäule 5 (B-Säule) befestigt werden. Hierzu wird ein Montagerahmen 32 an einer Anschraubplatte 1 des Roboterarmes eines nicht dargestellten Roboters in X-, Y- und Z-Richtung beweglich befestigt, wobei entsprechende Schlitten Sₓ, S_{y} und S_{z} mit Hilfe von Pneumatikzylindern Pₓ, P_{y} und P_{z} bewegt werden können. Der Montagerahmen 32 wird an dem Seitenrahmen 2 an drei Punkten zur Anlage gebracht und zwar oben an der Dachrahmenanlage 9 und dem Shimswinkel 10 und unten an dem Anlagestück 11. Die Türscharniere 28 werden von am Montagerahmen 32 beweglich befestigten Greifern 33 und durch in Y- und X-Richtung verlaufende Scharnieraufnahmen 7 und 8 während der Montage gehalten.

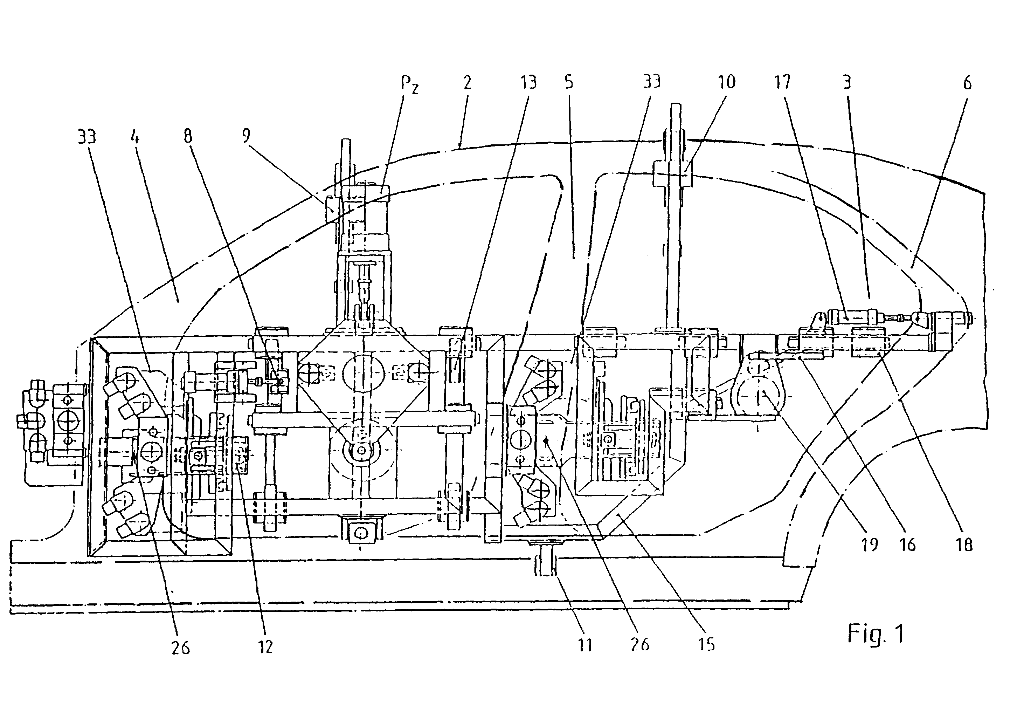

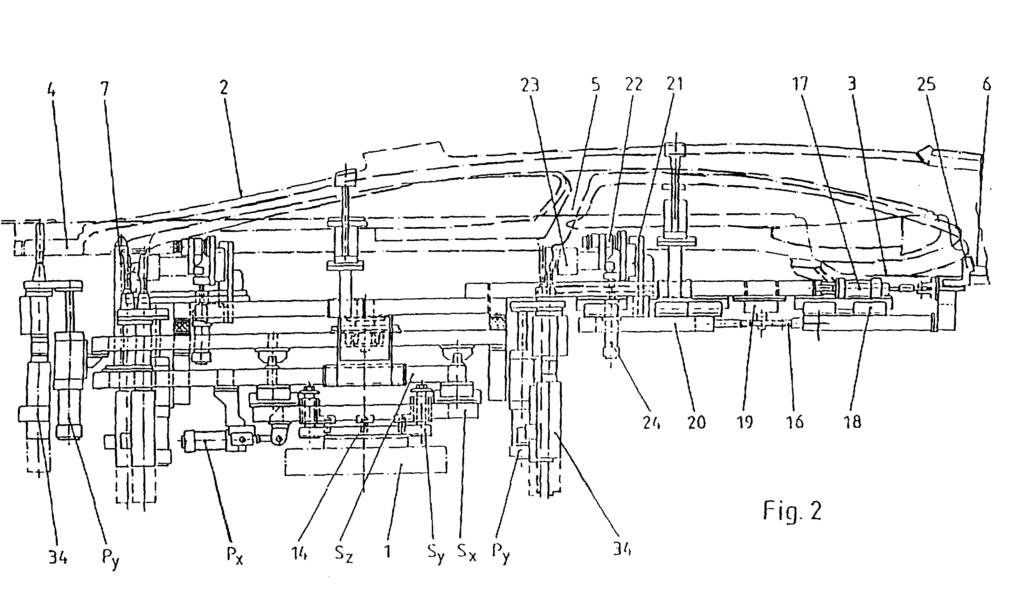

Die erfindungsgemäße Vorrichtung besteht insbesondere aus dem in X-Richtung wirkenden Taster 3, der durch den Versetzzylinder 17 mit seiner Konturanlage 25 im Bereich der C-Säule 6 gegen die Türöffnung gepresst wird. Der Versetzzylinder 17 ist mit einer Zahnstange 16 verbunden, die in einer in X-Richtung sich erstreckenden Linearführung 18 beweglich angeordnet ist. Die Zahnstange 16 wirkt direkt mit einem Getriebe 19 zur Einstellung des Toleranzausgleiches zusammen. In den Figuren 1 und 2 ist das erfindungsgemäße Positioniersystem für die Einstellung bei der Montage der Türscharniere 28 für die hintere Seitentür dargestellt. Das Getriebe 19 besitzt hierfür eine Übersetzung 1 : 2, sodass der Führungsrahmen 20 gemeinsam mit dem Fügerahmen 21 für das Scharnier, der Traverse 22 und der Spannerkonsole 23 automatisch um die halbe an der Konturanlage 25 gemessene Toleranzabweichung in X-Richtung verschoben wird. Dadurch wird erfindungsgemäß für die später eingebauten Türen die gleiche Spaltbreite im Bereich zwischen C-Säule 6 und Hintertür sowie zwischen den beiden Türen im Bereich der B-Säule 5 erreicht. Durch eine entsprechende starre Verbindung über den Montagerahmen 32 können auch die Türscharniere an der A-Säule 4 wunschgemäß positioniert werden. Alternativ können aber auch zur Positionierung der Türscharniere 28 an der A-Säule 4 im Bereich der vorderen Türe zwischen A-Säule 4 und B-Säule 5 die erfindungsgemäßen Einrichtungen 3, 16 bis 25 angebracht sein. Neben den beschriebenen Einrichtungen zur lagegenauen Positionierung in X-Richtung sind an dem Montagerahmen 32 auch Einrichtungen zum Ausgleich des bei der späteren Montage der Türen auftretenden Durchhängens der Türen aufgrund des Eigengewichtes (Door-Sagging) vorgesehen. Hierzu ist jeweils eine Drehplatte 12 bzw. ein Pendelrahmen 15 um den Drehpunkt 26 zum Ausgleich des Door-Saggings drehbeweglich am Montagerahmen 32 befestigt. In der Darstellung nach den Figuren 1 und 2 können hierdurch die Türscharniere 28 entgegen dem Uhrzeigersinn um einen vorgegebenen Winkel gedreht werden, sodass nach der späteren Türmontage ober- und unterhalb der Türen der gewünschte gleiche Abstand auch unter Berücksichtigung des Eigengewichtes der Türen erreicht wird. Auf diese Weise kann auf größere Einstellarbeiten nach der Montage der Türen verzichtet werden.

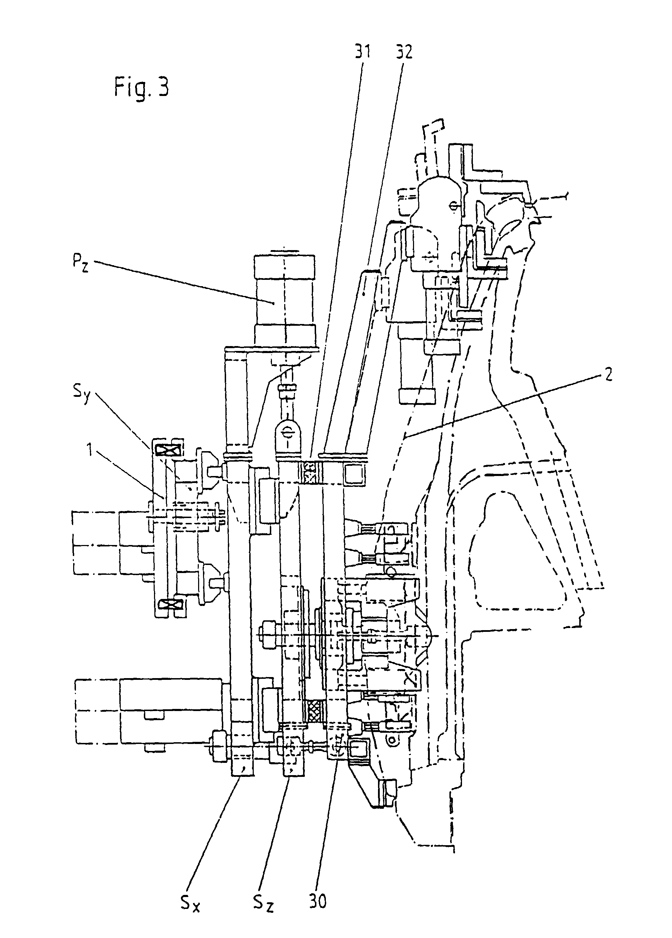

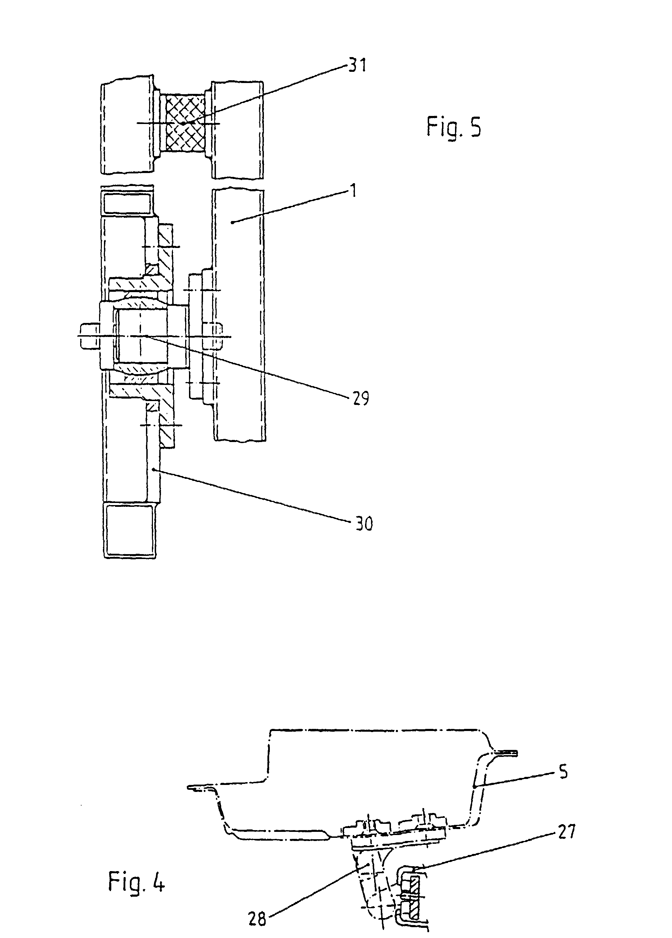

Für die Positionierung des Montagerahmens 32 an der Karosserie sind pneumatische Ausgleichssysteme in Y- und Z-Richtung integriert, um Toleranzanhäufungen zwischen Montagerahmen 32, Karosserie und Roboter zu eliminieren. Verwiesen wird hierzu auf die Führungen 13 und 14 für den Z- und Y-Ausgleich. Wie aus Fig. 5 im Zusammenhang mit den Figuren 1 bis 3 ersichtlich ist, kann die Befestigung des Montagerahmens 32 an der Anschraubplatte 1 des Roboterarmes über eine sphärische Lagerung 29, einen Pendelrahmen 30 und eine Gummifeder 31 erfolgen.

Nach der erfindungsgemäßen Positionierung können die Türscharniere 28 unter anderem mit Hilfe des Verfahrzylinders 24 und nach Fig. 4 über den Scharnierspanner 27 in ihre Position an der Türsäule 5 gebracht und pneumatisch oder durch Elektroschrauber 34 damit verschraubt werden. Die Schrauber können sowohl auf dem Montagerahmen 32 als auch starr vor der entsprechenden Schraubstelle montiert sein. Die Schraubenzuführung wird dann entsprechend ausgeführt.

**Bezugszeichenliste**:
- 1: Anschraubplatte des Roboterarmes
- 2: Seitenrahmen
- 3: Taster
- 4: Türsäule, A-Säule
- 5: Türsäule, B-Säule
- 6: Türsäule, C-Säule
- 7: Scharnieraufnahme in Y-Richtung
- 8: Scharnieraufnahme in X-Richtung
- 9: Dachrahmenanlage
- 10: Shimswinkel
- 11: Anlagestück in Y-Richtung
- 12: Drehplatte für Door-Sagging
- 13: Führung für Z-Ausgleich
- 14: Führung für Y-Ausgleich
- 15: Pendelrahmen mit Drehpunkt 26
- 16: Zahnstange
- 17: Versetzzylinder
- 18: Linearführung
- 19: Getriebe zur Einstellung des Toleranzausgleiches
- 20: Führungsrahmen
- 21: Fügerahmen für Scharnier
- 22: Traverse
- 23: Spannerkonsole
- 24: Verfahrzylinder
- 25: Konturanlage an 2
- 26: Drehpunkt für Door-Sagging
- 27: Scharnierspanner
- 28: Türscharnier
- 29: Sphärische Lagerung
- 30: Pendelrahmen zur Einstellung in Y-Richtung
- 31: Gummifeder
- 32: Montagerahmen
- 33: Greifer für 28
- 34: Elektroschrauber

- Sₓ, S_{y}, S_{z}: Schlitten an 32 zur Verfahrbarkeit in X-, Y-, Z-Richtung
- Pₓ, P_{y}, P_{z}: Pneumatikzylinder zur Bewegung von Sₓ, Sₓ, S_{z}

## Patentansprüche

1. Verfahren zum Anbringen der Türscharniere an Kfz-Karosserien, **dadurch gekennzeichnet**, dass taktil die tatsächliche Türöffnungsweite des in Fahrzeuglängsrichtung (X-Richtung) ein oder zwei Türen aufnehmenden Seitenrahmens in X-Richtung mit einem Taster erfasst und mit Hilfe eines damit über ein Hebelgetriebe verbundenen Positioniersystems die Anordnung der Türscharniere abhängig von der erfassten Maßabweichung in X-Richtung so korrigiert wird, dass zumindest die senkrechten Spalten bei später eingebauter Tür eine möglichst einheitliche Spaltbreite erhalten und dass nach einem Spannvorgang zunächst nur die Türscharniere an den Türsäulen befestigt werden.

2. Verfahren nach Anspruch 1, **dadurch gekennzeichnet**, dass die Anordnung der Türscharniere über ein einstellbares Hebelverhältnis in X-Richtung korrigiert wird.

3. Verfahren nach Anspruch 1 oder 2, **dadurch gekennzeichnet,** dass die B-Säulenscharniere für die Befestigung der hinteren Tür um die halbe Toleranzabweichung in X-Richtung verschoben werden.

4. Verfahren nach Anspruch 1, 2 oder 3, **dadurch gekennzeichnet,** dass die beiden übereinander angeordneten Scharniere einer Tür zur Montage von einer gemeinsamen Traverse aufgenommen werden, die drehbeweglich am Positioniersystem und/oder einem Montagerahmen befestigt ist, sodass die Scharniere an jeder Türsäule in Fahrzeugquerrichtung (Y-Richtung) spannungsfrei zur Anlage gebracht werden können.

5. Verfahren nach mindestens einem der vorhergehenden Ansprüche, **dadurch gekennzeichnet,** dass die beiden übereinander angeordneten Türscharniere einer Tür zum Ausgleich des durch das Gewicht der Tür verursachten Durchhängens der Tür (Door-Sagging) um einen entsprechenden vorgegebenen Winkel um eine waagerechte Achse entgegengesetzt gedreht und dann an der Türsäule befestigt werden.

6. Verfahren nach mindestens einem der vorhergehenden Ansprüche, **dadurch gekennzeichnet**, dass die Türscharniere vor oder nach Erfassung der Türöffnungsweite des Seitenrahmens durch das Positioniersystem automatisch aus Magazinen entnommen, vor der Funktionsfläche der Türsäule positioniert, pneumatisch damit verspannt und anschließend durch Schrauben und/oder Schweißen an der Türsäule befestigt werden.

7. Vorrichtung zum Anbringen der Türscharniere an Kfz-Karosserien zur Durchführung des Verfahrens nach den vorhergehenden Ansprüchen **gekennzeichnet durch** ein flexibles Positioniersystem bestehend aus einem Taster (3) zur Erfassung der Türöffnungsweite des Seitenrahmens (2), wobei der Taster (3) über eine Zahnstange (16) und ein Hebelgetriebe (19) direkt auf das Positioniersystem zur Korrektur der gemessenen Toleranzabweichung in X-Richtung wirkt, einem durch Roboter betätigbaren Montagerahmen (32) mit integrierten in X-, Y- und Z-Richtung verfahrbaren Schlitten (Sₓ, S_{y}, S_{z}), an dem das Positioniersystem in X-Richtung verfahrbar ist und an dem Füge- und Spanneinrichtungen (21 bis 24 und 27) zur pneumatischen Anpressung der Türscharniere (28) gegen die Türsäulen (4, 5)) und Einrichtungen (6 bis 8, P_{y}) zur dauerhaften Befestigung der Türscharniere (28) an den Türsäulen (4, 5) durch Verschrauben und/oder Verschweißen angeordnet sind.

8. Vorrichtung nach Anspruch 7, **gekennzeichnet durch** ein pneumatisches Ausgleichsystem (P_{y}, P_{z}, S_{y}, S_{z}) zur Positionierung des Montagerahmens (32) in Y- und Z-Richtung.

9. Vorrichtung nach Anspruch 7 oder 8, **dadurch gekennzeichnet**, dass der Taster (3) einen in X-Richtung wirkenden Versetzzylinder (17) zur Anpressung einer Konturanlage (25) gegen eine Meßstelle der Türöffnung besitzt und dass der Versetzzylinder (17) über eine Zahnstange (16) auf ein Getriebe (19) zur Einstellung des Toleranzausgleiches wirkt.

10. Vorrichtung nach Anspruch 7, 8 oder 9, **dadurch gekennzeichnet,** dass auf dem Montagerahmen (32) Dreheinrichtungen (12, 15) mit Drehpunkten (26) zum Ausgleich des Door-Sagging angeordnet sind.

## Claims

1. Process for mounting the door hinges to car bodies, **characterized in that** the width of the door opening of the side frame receiving one or two doors in the longitudinal direction of he vehicle (x-direction) is determined by a scanner by touch and that arrangement of the odor hinges is corrected by means of a positioning system connected to it via a lever mechanism as a function of the deviation in dimension in the x-direction such that at least the vertical gaps will have a possibly uniform gap width at the door installed later-on and that only the door hinges are fastened first to the door pillars after a tensioning operation.

2. Process according to claim 1, **characterized in that** the arrangement of the door hinges is corrected via an adjustable lever ratio in the x-direction.

3. Process according to claim 1 or 2, **characterized in that** the B pillar hinges are displaced half the tolerance deviation in the x-direction for fastening the rear door.

4. Process according to claim 1, 2 or 3, **characterized in that** the two hinges of a door, which are arranged one on top of another, are taken up for mounting by a common traverse, which is fastened rotatably on the positioning system and/or a mounting frame, so that the hinges can be brought into contact with each door pillar (y-direction) in a stress-free manner.

5. Process according to at least one of the above claims, **characterized in that** the two door hinges of a door, which are arranged one on top of another, are rotated in the opposite direction by a corresponding, predetermined angle around a horizontal axis to compensate the door sagging caused by the weight of the door and then fastened to the door pillar.

6. Process according to at least one of the above claims, **characterized in that** the door hinges are automatically removed from magazines before or after the determination of the width of the door opening of the side frame by the positioning system, positioned before the functional surface of the door pillar, braced therewith pneumatically and subsequently fastened to the door pillar by bolting and/or welding.

7. Device for mounting the door hinges on motor vehicle bodies for carrying out the process according to the above claims, c**haracterized by** a flexible positioning system comprising a scanner (3) for determining the width of the door opening of the side frame (2), wherein said scanner (3) acts directly on the positioning system for correcting the measured tolerance deviation in the x-direction via a toothed rack (16) and a lever mechanism (19), a mounting frame (32) which can be actuated by a robot, with integrated carriages (Sₓ, S_{z,} S_{z}) displaceable in the x, y and z-directions, on which the positioning system is displaceable in the x-direction, and on which joining and tensioning means (21 through 24 and 27) for pneumatically pressing the door hinges (28) against the door pillars (4, 5) and said means (6 through 8, P_{y}) are arranged for permanently fastening the door hinges (28) to the door pillars (4, 5) by bolting and/or welding.

8. Device according to claim 7, **characterized by** a pneumatic compensating system (P_{y} and P_{z}, S_{y} and S_{z}) for positioning the mounting frame (32) in the y and z-directions.

9. Device according to claim 7 or 8, **characterized in that** the scanner (3) has a displacing cylinder (17) acting in the x-direction for pressing a contour unit (25) against a measuring point of the door opening, and that the displacing cylinder (17) acts via a toothed rack (16) on a mechanism (19) for setting the tolerance compensation.

10. Device according with claim 7, 8 or 9, **characterized in that** the rotating means (12, 15) with the fulcrum points (26) for compensating the door sagging are arranged on the mounting frame (32).

## Revendications

1. Procédé de pose de charnières de portière sur des carrosseries de véhicule, **caractérisé en ce que** la largeur d'ouverture réelle de la portière du cadre latéral recevant une ou deux portières dans le sens longitudinal du véhicule (sens X) est saisie par voie tactile au moyen d'un palpeur dans le sens X et que la disposition des charnières de portière est corrigée en fonction de la variation de tolérance saisie dans le sens X, au moyen d'un système de positionnement relié audit palpeur via un mécanisme à levier, de manière telle qu'au moins les fentes verticales ont une largeur de fente aussi uniforme que possible lors du montage ultérieur de la portière et qu'après une opération de serrage seules les charnières de portière sont d'abord fixées aux montants de portière.

2. Procédé selon la revendication 1, **caractérisé en ce que** la disposition des charnières de portière peut être corrigée dans le sens X par un rapport de levier ajustable.

3. Procédé selon la revendication 1 ou 2, **caractérisé en ce que** les charnières du montant B sont déplacées de la moitié de la variation de tolérance dans le sens X pour la fixation de la portière arrière.

4. Procédé selon la revendication 1, 2 ou 3, **caractérisé en ce que** les deux charnières d'une portière placées l'une au-dessus de l'autre sont portées pour le montage par une traverse commune qui est fixée de manière pivotante sur le système de positionnement et / ou un cadre de montage de manière à ce que les charnières puissent être amenées en contact sans tension avec chaque montant de portière dans le sens transversal du véhicule (sens Y).

5. Procédé selon au moins l'une des revendications précédentes, **caractérisé en ce que,** pour compenser le fléchissement de la portière (door-sagging) causé par le poids de la porte, les deux charnières d'une portière placées l'une au-dessus de l'autre sont tournées autour d'un axe horizontal en sens opposé avec un angle correspondant prédéterminé et fixées ensuite au montant de portière.

6. Procédé selon au moins l'une des revendications précédentes, **caractérisé en ce que** les charnières de portière sont prises automatiquement dans des magasins avant et après la saisie de la largeur d'ouverture de portière du cadre latéral par le système de positionnement, positionnées devant la surface fonctionnelle du montant de portière, serrées avec celui-ci par voie pneumatique et fixées ensuite au montant de portière par vissage et,/,ou par soudage.

7. Dispositif de pose des charnières de portière sur des carrosseries de véhicule pour la réalisation du procédé selon les revendications précédentes, **caractérisé en ce qu**'un système de positionnement flexible comprenant un palpeur (3) pour la saisie de la largeur d'ouverture de porte du cadre latéral (2), le palpeur (3) agissant directement sur le système de positionnement pour la correction de la variation de tolérance mesurée dans le sens X via une crémaillère (16) et un mécanisme à levier (19), un cadre de montage (32) pouvant être activé par un robot avec chariots (Sₓ, S_{y}, S_{z}) intégrés déplaçables dans les sens X, Y et Z, sur lequel le système de positionnement est déplaçable dans le sens X, et sur lequel sont montés des dispositifs de raccordement et de tension (21 à 24 et 27) pour la compression pneumatique des charnières de portière (28) contre les montants de portière (4, 5) et des dispositifs ( 6 à 8, P_{y}) pour la fixation permanente des charnières de portière (28) aux montants de portière (4, 5) par vissage et / ou par soudage.

8. Dispositif selon la revendication 7, **caractérisé par** un système de compensation pneumatique (P_{y}, P_{z}, S_{y}, S_{z}) pour le positionnement du cadre de montage (32) dans les sens Y et Z.

9. Dispositif selon la revendication 7 ou 8, **caractérisé en ce que** le palpeur (3) est pourvu d'un vérin de déplacement (17) agissant dans le sens X pour la compression d'une unité de contour (25) contre un point de mesure de l'ouverture de porte et que le vérin de déplacement (17) agit sur un mécanisme (19) via une crémaillère (16) pour ajuster la compensation de tolérance.

10. Dispositif selon la revendication 7, 8 ou 9, **caractérisé en ce que** des dispositifs de rotation (12, 15) avec des points de rotation (26) sont installés sur le cadre de montage (32) pour la compensation du fléchissement de la porte (door-sagging).
